# EUROPEAN PATENT APPLICATION

(11) **EP 3 299 428 A1**
(43) Date of publication of application: **28.03.2018**
(21) Application number: 16799257.7
(22) Date of filing: 20.05.2016
(51) Int. Cl.: C09D 163/00, C09D 5/08, C09D 7/00, B05D 7/14

(54) **SINGLE-COMPONENT HIGH-ANTICORROSION QUICK-DRYING EPOXY COATING COMPOSITION**

(30) Priority: 22.05.2015 CN 201510264194
(71) Applicant: PPG Coatings (Tianjin) Co. Ltd., Tianjin 300457 (CN)
(72) Inventor: ZHOU, Xuesong, Tianjin 300457 (CN); MAO, Jinqi, Tianjin 300457 (CN); ZHANG, Guihu, Tianjin 300457 (CN)
(74) Representative: f & e patent
(86) International application number: PCT/CN2016/082752
(87) International publication number: WO 2016/188369

(57) **Abstract**

The present invention provides a one-component (1K) anti-corrosive fast-dry epoxy resin coating composition which is free of a curing agent. The present invention further provides a coated metal substrate, which comprises a metal substrate, an epoxy resin base coat at least partially coated onto the metal substrate, and a top coat at least partially coated onto the base coat.

## Description

### Invention Field

The present invention relates to a one-component (1K) anti-corrosive fast-dry epoxy resin coating composition and a substrate coated therewith.

### Background

The epoxy coatings can be widely used in metal surface base coat applications including automotive parts, argricultural machinery and construction machinery. Typically, these epoxy coatings are dual-component systems consisted of resins components and curing agent components, which are required to combine prior to application. To provide optimum coated film performances, the two components should be mixed in an appropiate blending ratio immediately before application. If the blending ratio is improper, the resulting film may exhibit early rusting, blistering or other failures. Such failures will typically lead to removal of the failed coats at high cost and application of new coats. Morevore, such dual-component coatings have complicated processes, require high curing temperature and long curing time, and they hence are not suitale for the situations which lack baking and are urgent in cycle.

Therefore, there is a need for one-component epoxy resin coating compositions which are capable of achieving fast drying and comparable to the dual-component epoxy systems in performances. As compared to coventional dual-component epoxy resin systemts, the one-component epoxy system, without incorporating a curing agent, has the characteristics of fast-drying and fast-curing at ambient temperature, strong adhesion to many substrates, and high corrosion resistance, and thus is easy to operate and enhances overall operating efficiency.

### Summary of the Invention

In one embodiment, the present invention provides a one-component anti-corrosion epoxy resin coating composition, comprising an epoxy resin (a) and a solvent comprising a mixture of cyclohexanone, methyl ethyl ketone, and butyl acetate.

In another embodiment, the present invention provides a coated substrate, comprising: a metal substrate; the epoxy resin coating composition coated on at least a portion of the metal substrate as a base coat; and a top coat coated on at least a portion of the base coat.

### Detailed Description

Other than in the operating examples, or where otherwise indicated, all numbers expressing quantities of ingredients, reaction conditions, and so forth used in the specification and claims are to be understood as being modified in all instances by the term "about". Accordingly, unless indicated to the contrary, the numerical parameters set forth in the following specification and attached claims are approximations that may vary depending upon the desired properties sought to be obtained by the present invention. At the very least, and not as an attempt to limit the application of the doctrine of equivalents to the scope of the claims, each numerical parameter should at least be construed in light of the number of reported significant digits and by applying ordinary rounding techniques.

Notwithstanding that the numerical ranges and parameters setting forth the broad scope of the invention are approximations, the numerical values set forth in the specific examples are reported as precisely as possible. Any numerical value, however, inherently contain certain errors necessarily resulting from the standard deviation found in their respective testing measurements.

As used herein, the term "one-component" and like terms (for example 1K) refer to coating compositions provided in the form of a single component system, wherein all of the coating components are combined and stored in a single container.

As used herein, the term "fast dry or quick dry" means that the one-component epoxy coating composition of the present invention following application to a substrate is capable of being dry at ambient temperature (for example, 20-27°C, such as 25°C) in 20-30 min.

The coating compositions of the present invention are curable at low temperatures. As used herein, the term "low temperature" and like terms mean that the coating composition, following application to a substrate, is capable of achieving cure at a temperature in the range of about -10 to 140°C, such as 5 to 80°C, in some cases 10 to 60°C and, in yet other cases, 15 to 40°C.

Examples of suitable epoxy resins (a) comprise one-component bisphenol A modified epoxy resins.

In a preferred embodiment, epoxy resins (a) suitable for use in the present invention comprise one-component bisphenol A modified epoxy resins having a weight-average molecular weight in the range of about 28000-32000.

Epoxy resins (a) suitable for use in the present invention are commercially available, including without limitation one-component bisphenol A modified epoxy resin from Arakawa Chemical Industries, Ltd. under the trademark KA1435R.

In some embodiments, the epoxy resin (a) may be present in the coating composition of the present invention in an amount of about 35-60wt% based on the weight of the coating composition.

In some preferred embodiments, the coating composition of the present invention further comprises an epoxy resin (b) which is different from the epoxy resin (a).

Examples of the epoxy resins (b) suitable for use in the present invention comprise bisphenol A epoxy resins with an epoxy value of about 290-320.

Bisphenol A epoxy resins suitable for use as the epoxy resins (b) of the present invention may be available from for example Nanya Resin Company under the product names NPSN-134X80 and NPSN-901X75, from DOW under the product name LP301, and from Yuanbang Resins under the product names RESIN YPE-011B75 and YPE-011X75.

In some embodiments, the epoxy resin (b) may be present in the coating composition of the present invention in an amount of about 2-10wt% based on the weight of the coating composition.

The coating composition of the present invention can further comprise a pigment. The pigments suitable for use in the present invention are those which are typically used in the anti-corrosion coatings. Various rust-proofing pigments may be used. Examples of pigments include zinc powder (Zn), zinc phosphate, and aluminum powder (Al) or zinc oxide (ZnO). In some embodiments, the pigments may be present in an amount of at most about 10 percent by weight based on the total weight of the coating composition.

The coating composition of the present invention may further comprise a suitable filler. Fillers suitable for use in the present invention include, but are not limited to talc powders, barium sulfate, calcium carbonate, mica, feldspar and the like. In some embodiments, the fillers may be present in an amount of at most 40 percent by weight based on the total weight of the coating composition.

Suitable solvents for use in the present invention include, but are not limited to, aromatic hydrocarbons, esters, ketones, alcohols, glycols, glycol ethers, and chlorinated solvents. Suitable ketones include methyl ethyl ketone (MEK), methyl amyl ketone, diethyl ketone, acetone, methyl isopropyl ketone, propylene glycol monomethyl ether acetate, and cyclohexanone; suitable ethers include tetrahydrofuran, 1,2-dimethoxyethane, and 1,2-diethoxyethane; suitable esters include ethyl acetate and n-butyl acetate; suitable alcohols include isobutanol, n-butanol, 2-propanol, n-propanol, and amyl alcohol; suitable aromatic hydrocarbons include benzene, toluene, and xylene; suitable terpene hydrocarbon oils include turpentine oil, D-limonene, and pinene; suitable paraffinic solvents include mineral spirit, Swasol 310 (from Cosmo Matsuyama Oil Co., Ltd.), and Solvesso 100 (from Exxon Chemical Company); suitable halogenated aliphatic hydrocarbons include carbon tetrachloride, chloroform, trichloroethylene, and methylene chloride; suitable halogenated aromatic hydrocarbons include chlorobenzene; aniline, triethylamine, pyridine, dioxane, acetic acid, acetonitrile, and carbon disulfide.

In some embodiments, the solvents suitable for use in the coating composition of the present invention comprise a combination of one or more solvents. In a preferred embodiment, the solvent comprises a mixture of cyclohexanone, methyl ethyl ketone, and butyl acetate. In a more preferred embodiment, the solvent comprises a mixture of cyclohexanone, methyl ethyl ketone, and butyl acetate in a weight ratio of 2-3:3-5:4-6. The solvent can sufficiently dissolve the epoxy resins in the coating composition of the present invention.

In some embodiments, the solvents or solvent combinations are present in the coating composition of the present invention in amount of about 20-50wt% based on the total weight of the coating composition.

The 1K epoxy coating compositions of the present invention are easy to operate, can fast dry and cure at room temperature, and thus are quite suitable for the product lines which lack baking conditions and are urgent in cycle. Further, the 1K epoxy coating compositions of the present invention have strong adhesion to various substrates and superior corrosion resistance, thereby exhibiting significant advantages over the prior 2K epoxy system.

The present invention further provides a coated substrate, wherein the epoxy resin coating compositions are coated on at least a portion of the substrate, preferably metal substrates as a base coat. The coated substrate preferably further comprises at least one top coat adhered to the base coat.

Suitable metal substrates include but are not limited to the substrates formed from cold rolled steel, polishing steel, black steel, iron phosphate-treated steel, zinc phosphate-treated steel, hot-dip galvanized steel, aluminum-zinc-magnesium alloy, electrogalvanized steel sheet, tin plate, stainless steel, or brass.

The epoxy resin coating compositions described above can be applied to the substrate to be treated by conventional coating techniques such as, for example, brush coating, spray coating, dip coating, and the like. The thicknesses of the film formed by application of the base coat composition will vary depending on intended applications, but it will typically be in a range of 15-40µm based on the dry film thickness, preferably in a range of 20-25µm based on the dry film thickness. Drying of the base coat is generally carried out at ordinary temperature (20-27°C), and drying time is 20-30 minutes.

The at least one top coat coated on the base coat may be conventional top coat coating known in the field, and examples thereof include but are not limited to an alkyd top coat, a polyurethane top coat, an alkyd amino top coat, and an acrylic amino top coat. The dried film thickness of the top coat is typically in a range of 18-30 µm, preferably 20-25 µm. Drying of the top coat is generally carried out at ordinary temperature (20-27°C), and drying time is 20-30 minutes.

The invention will be more readily understood by reference to the following examples, which are included merely for purposes of illustration of certain aspects and embodiments of the present invention and are not intended to limit the invention.

### Examples

### Preparation of the base coat coating composition

The 1K epoxy base coat is prepared as follows according to Table 1:

The components 1-7 are sequentially charged into a mixing tank under low speed stirring, mixed for 20-30 minutes at high speed, grinded to a particle size below 25 µm, filtered and ready to use. Unless otherwise indicated, all parts and percentage in the examples are by weight.

**Table 1. Compositions of the inventive 1K epoxy base coat**

| No. | Components | Amounts (Wt%) |
|---|---|---|
| 1 | Epoxy resin (a), one-component bisphenol A modified epoxy resin available from Arakawa | 45 |
| 2 | Adjuvant (dispersing agent 0.6 part, BYK Deformer 0.4 part) | 1 |
| 3 | Anti-corrosion filler (zinc phosphate) | 6 |
| 4 | Filler (talc powder 8 parts, barium sulfate 6 parts) | 14 |
| 5 | Pigment (titanium dioxide 3 parts, ferrite yellow 12 parts) | 15 |
| 6 | Epoxy resin (b), Bisphenol A epoxy resin available from Nanya Resin company | 5 |
| 7 | Solvent (butyl acetate 6 parts, cyclohexanone 3 parts, MEK 5 parts) | 14 |

### 1. Performance comparisons between the Inventive 1K epoxy base coat and the commercial 2K epoxy base coat

**Table 2. Performance comparisons**

| Performances | 1K epoxy base coat (Table 1) | 2K epoxy base coat (SEP74662P-GY available from PPG) | Test Method |
|---|---|---|---|
| Surface Dry Time | 15-20mins | >30mins | GB/T 1728 (B-method) |
| Dry to Touch Time | 30mins | 3-6H | GB/T 1728 (B-method) |
| Dry Half Hard Time | 30-40mins | 12-16H | GB/T 1728 (B-method) |
| Drying | baking/air drying | baking/air drying | |
| Adhesion, Rating | 0-1 | 0-1 | GB/T 9286 |
| Impact | 30-40kg* cm | 40-50kg*cm | GB/T 1732 |
| Flexibility | 2mm | 2mm | GB 1731-1993 |
| Pencil Hardness | H-2H | H-2H | GB/T 1730 scratching |
| Mandrel Bend | 3-6mm | 3-5mm | ASTM D522 |

From the above table, the inventive 1K epoxy base coat is superior to the commercial 2K epoxy base coat in surface dry time, dry to touch time, dry half hard time, and impact properties, and is comparable to the commercial 2K epoxy base coat in other properties.

### 2. Adhesion property and corrosion resistance of the inventive 1K epoxy base coat on various substrates

### Panel Preparation:

Various substrates shown in Table 3 are surface-treated through solvent degreasing. The inventive epoxy base coat is spray-coated onto various substrates. The top coat (polyurethane, SPU74822T-Y from PPG) is spray-coated at 5-10 min after application of the base coat. Then, the resulting coats are dried at 20-25°C for 7 days. In the resulting coat system, the base coat is about 20-25 µm thick and the top coat is about 20-25 µm thick (measured by Electromagnetic Coating Thickness Tester).

The coats formed on various substrates are tested for adhesion property and corrosion resistance, and the results are shown in Table 3.

**Table 3. Adhesion property and corrosion resistance of the inventive 1K epoxy base coat on various substrates**

| Substrate | 1-adhesion (×1) (according to GB/T 9286) | After humidity resistance testing, 2-adhesion (×2) (according to GB/T 9286) | Salt spray resistance (×3) (according to GB/T1771) |
|---|---|---|---|
| SPCC-SD (cold rolled steel) | 5B | ≥4B | 1-2 mm/240 hr |
| SPCC-SD (polishing steel) | 5B | ≥4B | 1-2 mm/240 hr |
| black steel | 5B | ≥4B | 1-2 mm/240 hr |
| iron phosphate-treated steel | 5B | ≥4B | 1-2 mm/240 hr |
| zinc phosphate-treated steel | 5B | ≥4B | 0-1 mm/480 hr |
| hot-dip galvanized steel | 5B | ≥4B | 0-1 mm/480 hr |
| aluminum-zinc-magnesium alloy | 5B | ≥4B | 0 mm/480 hr |
| electrogalvanized steel sheet | 5B | ≥4B | 0 mm/480 hr |
| automobile body sheet | 5B | ≥4B | 0-1 mm/480 hr |
| auditory plate (tin plate) | 5B | ≥4B | 1-2 mm/240 hr |
| pure aluminum plate | 5B | ≥4B | 1-2 mm/240 hr |
| aluminum alloy (5052) | 5B | ≥4B | 1-2 mm/480 hr |
| stainless steel (SUS-304) | 5B | ≥4B | 0mm/480 hr |
| stainless steel (SUS-403) | 5B | ≥4B | 0mm/480 hr |
| brass | 5B | ≥4B | 1∼2mm/480 hr |
| bronze | 5B | ≥4B | 0mm/480 hr |

It can be seen from Tables 2 and 3 that the inventive epoxy base coat, without incorporating a curing agent, has the advantages of fast-drying and fast-curing at ambient temperature, strong adhesion to many substrates, and high corrosion resistance, and is comparable to the commercial product in flexibility, hardness, and impact property.

### 3. Performance measurements on matching of the inventive 1K epoxy base coat with various top coats

### Sample panels preparation:

The sample panels used in this test are stainless steel/aluminum alloy/cold rolled steel of 0.8t × 70 × 150mm. The sample panels are firstly surface-treated through solvent degreasing. The inventive epoxy base coat is spray-coated onto the sample panels. The top coats shown in the following Table are spray-coated at 5-10 min after application of the base coat. Then, the base coat- alkyd top coat and the base coat-polyurethane top coat are dried at 20-25°C for 7 days, the base coat-amino top coat is dried at 130°C for 15 min, and the base coat-acrylic top coat is dried at 160°C for 20 min. In the resulting coat systems, the base coat is about 20-25 µm thick and each of the top coats is about 20-25 µm thick (measured by Electromagnetic Coating Thickness Tester).

Each of the base coat-top coats is tested for the following performances, and the results are shown in Table 4.

**Table 4. Performance measurements on matching of the inventive 1K epoxy base coat with various top coats**

| Testing items on top coats | Results | | | | Test method /conditions |
|---|---|---|---|---|---|
| | alkyd top coat (PPG, SAL76199T-Y) | polyurethane top coat (PPG, SPU74822T-Y) | amino top coat (PPG, SPE76765T-Y) | acrylic top coat (PPG, SPU74357T-Y) | |
| Dry Time | 20°C×7 days | 20°C×7 days | 130°C×15 min | 160°C×20 min | GB/T 1728 |
| Gloss | 90 | 90 | 91 | 90 | GB49873.6-85 |
| Pencil Hardness | HB | H | H | 2H | GB/T 1730 Scratching |
| Adhesion | 0 (1mm) | 0 (1mm) | 0 (1mm) | 0 (1mm) | GB/T 9286 |
| Impact Strength | Pass | Pass | Pass | Pass | GB/T 1732 |
| Water Resistance /96H | Normal | Normal | Normal | Normal | GB/T 9274 |
| Humidity Resistance/120H | Normal | Normal | Normal | Normal | GB/T 1740 |
| Salt Fog Resistance /240H | 0-1 mm | 0 mm | 0-1 mm | 0 mm | GB/T1771 |
| Solvent Resistance | ----- | Normal | Normal | Normal | GB/T 1734 |

Although particular aspects of this invention have been explained and described above, it will be evident to those skilled in the art that numerous variations and modifications to the present invention may be made without departing from the invention as defined in the appended claims. Therefore, the appended claims are intended to encompass these variations and modifications falling within the present invention.

## Claims

1. A coating composition, comprising an epoxy resin (a) and a solvent comprising a mixture of cyclohexanone, methyl ethyl ketone, and butyl acetate.

2. The coating composition according to claim 1, comprising 35-60 wt% of the epoxy resin (a), based on the weight of the coating composition.

3. The coating composition according to claim 1, wherein the epoxy resin (a) comprises a one-component bisphenol A modified epoxy resin having a weight-average molecular weight in the range of 28000-32000.

4. The coating composition according to claim 1, which is free of a curing agent.

5. The coating composition according to claim 1, wherein the solvent comprises a mixture of cyclohexanone, methyl ethyl ketone, and butyl acetate in a weight ratio of 2-3:3-5:4-6.

6. The coating composition according to claim 1, further comprising a bisphenol A epoxy resin (b) with an epoxy value of 290-320.

7. The coating composition according to claim 6, wherein the bisphenol A epoxy resin (b) is present in the coating composition in an amount of 2-10 wt% based on the weight of the coating composition.

8. A coated substrate, comprising:
(i) a metal substrate;
(ii) the coating composition of any one of claims 1-7 coated on at least a portion of the metal substrate as a base coat; and
(iii) a top coat coated on at least a portion of the base coat.

9. The coated substrate according to claim 8, wherein the metal substrate comprises a substrate formed from cold rolled steel, polishing steel, black steel, iron phosphate-treated steel, zinc phosphate-treated steel, hot-dip galvanized steel, aluminum -zinc-magnesium alloy, electrogalvanized steel sheet, tin plate, stainless steel, or brass.

10. The coated substrate according to claim 8, wherein the top coat comprises an alkyd top coat, a polyurethane top coat, an alkyd amino top coat, and an acrylic amino top coat.
